# EUROPEAN PATENT APPLICATION

(11) **EP 1 759 940 A1**
(43) Date of publication of application: **07.03.2007**
(21) Application number: 06021835.1
(22) Date of filing: 25.03.1996
(51) Int. Cl.: B60R 22/44, B60R 22/46, B60R 22/48

(54) **Electronic seat belt tensioning system**

(30) Priority: 30.03.1995 US 413601
(62) Divisional of application: 03010244.6
(71) Applicant: AUTOMOTIVE SYSTEMS LABORATORY INC., Farmington Hills, Michigan 48331 (US)
(72) Inventor: Behr, Leonard W., White Lake, Michigan 48386 (US)
(74) Representative: Smith, Samuel Leonard

(57) **Abstract**

A method and system (10) for controlling the tensioning of a vehicle seat belt utilizes a control processor (20) and a motor (12) to provide initial tensioning of the seat belt. After initial tensioning, the control processor (20) removes substantially all tension on the seat belt while continuously monitoring seat belt pay out via an encoder (18). The system provides out-of-position warnings, and is responsive to vehicle acceleration information from a crash discrimination system (22) and/or an object detecting radar system (26) to control tensioning of the seat belt. The system further provides for earlier seat belt tensioning activation by utilizing a pyrotechnic pretensioner (32) having a replaceable pyrotechnic cartridge (38).

## Description

### BACKGROUND OF THE INVENTION

The present invention generally relates to a vehicle passenger seat belt system, and more particularly a seat belt system which provides enhanced passenger comfort through electronic belt tension control.

Generally, known seat belt systems typically combine a tensioner and a pretensioner to control seat belt tension. Typical belt tensioners operate by exerting a constant belt tension through spring loading. The spring biasing is designed to partially remove slack to keep the belt snug against the occupant's chest, while not tensioning the belt hard enough to overcome the slack caused by heavy clothing. Because the belt tension is constantly applied, the belt tension exhibited by typical tensioners tends to be an irritant which may cause some occupants not to wear belts, or to otherwise arrange a manner of tension relief which defeats the function of the chest-restraint belt because of the creation of excessive slack.

Known pretensioner arrangements have also proven to be unsatisfactory. More specifically, typical seat belt pretensioners are usually in the form of a pyrotechnic device which utilizes an explosive gas generator to activate and power a mechanism which winds up the slack in the lap and chest belts. However, typical seat belt pretensioners have limited ability to reel in belt length, because winding depends on the force and stroke of a piston activated by the pyrotechnic device. Therefore, if as noted above the belt has been extended to relieve irritation, the problems of known belt tensioning systems is compounded by the fact that the pretensioner may be unable to take up sufficient length to afford optimum occupant protection.

In addition to the above described deficiencies, known occupant restraint systems are unable to remind occupants that they are out of optimal position to receive protection from the vehicle occupant restraint system.

### SUMMARY OF THE INVENTION

It is therefore an object of the present invention to provide an improved seat belt tensioning system which provides a tensionless state during noncritical situations.

It is a further object of the present invention to provide an improved seat belt tensioning system which electronically controls the seat belt tension based on sensed vehicle acceleration, detection of potentially impacting objects, and/or occupant position relative to fixed structure within the vehicle.

It is another object of the present invention to provide a seat belt tensioning system which utilizes a reusable pyrotechnic pretensioner to reduce the cost and complexity of servicing the pretensioner after an actuation, thereby obviating cost disincentives to lowering triggering threshold levels.

It is another object of the present invention to provide a seat belt tensioning system which electrically controls the seat belt tension to create a substantially tensionless normal mode of operation with a reliable, low threshold tensioning capability.

It is another object of the present invention to provide a seat belt tensioning system which utilizes the output of an external radar system to anticipate potential vehicle impacts and thereby trigger early tensioning of the seat belt.

In accordance with the present invention, a method and system for controlling the tension of a seat belt used in a vehicle comprises the steps of detecting deployment of the seat or shoulder belt from a wound condition, determining the amount of belt which is unwound, and activating a winding means to incrementally rewind the belt after a belt buckle is coupled until a first predetermined tensive force is exhibited by the seat belt on the occupant. The amount of belt which is incrementally rewound is tracked after which the winding means is deactivated to substantially release the tensive force exhibited by the seat belt on the occupant, thereby placing the seat belt in a tensionless state. While the belt is in the tensionless state, the present invention provides for continuously monitoring the amount of belt unwound responsive to occupant movement, compares the monitored amount of belt unwound to a predetermined pay out value, generates an occupant out-of-position alarm and reapplies tension if the monitored amount exceeds the predetermined value. In addition, the present invention also continuously monitors vehicle acceleration, determines whether the vehicle acceleration has exceeded a first threshold value, and activates the winding means to rewind the seat belt until a second predetermined tensive force greater than the first predetermined tensive force is exhibited on the occupant if the first threshold value has been exceeded. When the vehicle acceleration falls back below the first threshold value, the winding means is deactivated after a short delay to release the tensive force exhibited by the seat belt. The present invention further determines whether the vehicle acceleration has exceeded a second threshold value greater than the first threshold value, and triggers a pretensioner means if the second threshold has been exceeded. The pretensioner rewinds the seat belt with a third predetermined tensive force greater than the second predetermined force generated by the winding means.

In further accordance with the present invention, the pretensioner means for rewinding the vehicle seat belt with the third predetermined tensive force can be advantageously implemented comprising a replaceable pyrotechnic cartridge, a means for igniting the replaceable pyrotechnic cartridge in response to detection of the predetermined vehicle acceleration condition, and an actuator means coupled to the winding means for actuating the winding means when the pyrotechnic cartridge is ignited. After ignition, only the pyrotechnic cartridge requires replacement if the crash energy was low enough that the belt system would not be damaged.

There may be provided a
method of controlling the tension of.a vehicle seat belt comprising the steps of:
detecting deployment of said seat belt from a wound condition to an unwound condition;
determining the amount of seat belt which is unwound;
activating a winding means to incrementally rewind the seat belt until a first predetermined tensive force is exhibited by the seat belt on a vehicle occupant;
deactivating the winding means to substantially release the first predetermined tensive force exhibited by the seat belt on the occupant to place the seat belt in a' substantially tensionless state;
continuously monitoring the amount of seat belt unwound while in the tensionless state;
comparing the monitored amount of seat belt unwound to a predetermined pay out value;
generating an out-of-position alarm if the monitored amount exceeds the predetermined pay out value;
continuously monitoring vehicle acceleration;
determining whether the vehicle acceleration has exceeded a first threshold value;
if the first threshold value is exceeded, activating the winding means to rewind the seat belt until a second predetermined tensive force is exhibited on the occupant;
deactivating the winding means to release the second predetermined tensive force exhibited by the seat belt if the vehicle acceleration falls back below the first threshold value;
determining whether the vehicle acceleration has exceeded a second threshold value greater than the first threshold value;
triggering a pretensioner means if the second value threshold has been exceeded, said pretensioner means rewinding said seat belt with a third predetermined tensive force greater than the second predetermined force generated by the winding means.

The step of continuously monitoring the amount of seat belt unwound while in the tensionless state may further comprise the step of periodically activating said winding means to incrementally rewind the seat belt until the first predetermined tensive force is exhibited by the seat belt on the occupant.

The step of generating an out-of-position alarm may further comprise the step of activating said winding means to incrementally rewind the seat belt until the amount of unwound seat belt is less than the predetermined pay out value.

The method may further comprise the steps of receiving a signal indicative of a potential impact between the vehicle and an object, and activating said winding means to incrementally rewind the seat belt until the second predetermined tensive force is exhibited by the seat belt on the occupant.

The signal indicative of a potential impact may be generated by a radar system.

The step of triggering a pretensioner means may further comprise the steps of recording data representative of vehicle crash severity, and generating a service warning if the vehicle crash data is representative of a predetermined severity of crash.

The service warning may indicate a need to replace the seat belt because of potential stretching.

The pretensioner means may comprise a replaceable pyrotechnic cartridge, and said triggering step comprises the step of igniting said replaceable pyrotechnic cartridge.

There may also be provided a vehicle seat belt tension control system comprising:
a control means coupled to a seat belt tensioning mechanism, said control means comprising:
   a processor means for monitoring a predetermined condition of the vehicle;
   an electric motor coupled to said seat belt tensioning mechanism for adjusting the tension of said seat belt based on the monitored vehicle condition;
   means for detecting seat belt payout;
   means responsive to said pay out detecting means for detecting an unsafe occupant seating condition; and
   a tactile warning means coupled to said seating condition detection means and said control means for alerting the occupant to a detected unsafe seating condition by causing said electric motor to momentarily increase the seat belt tension to tug on the occupant; and
a pretensioner means connected to the seat belt tensioning mechanism for tensioning the seat belt in response to a detected emergency vehicle condition, said pretensioner means comprising a replaceable pyrotechnic cartridge.

The present invention will be more fully understood upon reading the following detailed description of the preferred embodiment in conjunction with the accompanying drawings.

### BRIEF DESCRIPTION OF THE DRAWINGS

Fig. 1 is a block diagram of an electronic seat belt tensioning system in accordance with the present invention;
Fig. 2 is a flow diagram illustrating the normal tensioning control operation of the present invention;
Fig. 3 is a flow diagram illustrating the emergency tensioning control operation in accordance with a first embodiment of the present invention; and
Fig. 4 is a flow diagram illustrating the emergency tensioning control operation in accordance with a second embodiment of the present invention.

### DETAILED DESCRIPTION OF THE PREFERRED EMBODIMENT(S)

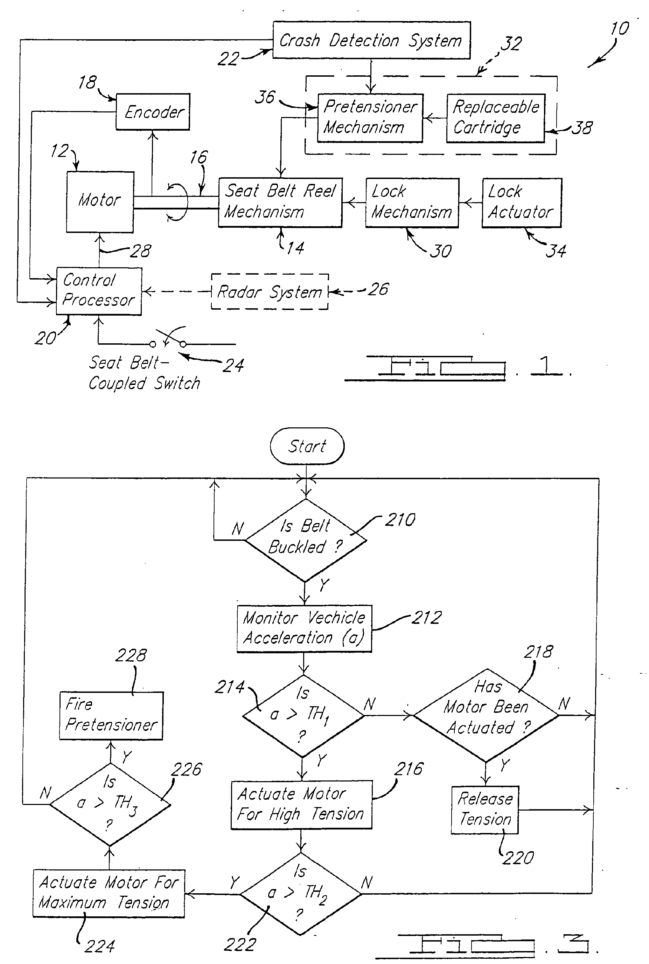

Referring to Fig. 1, there is shown an electronic seat belt tensioning system 10 in accordance with the present invention having a motor 12, such as a step motor, coupled to seat belt reel mechanism 14 via a motor shaft 16. The seat belt can be a lap belt and/or a shoulder belt. A shaft-encoder 18 is coupled to the shaft 16 to provide a quantified output of the amount and direction of shaft rotation for a control processor 20. In accordance with one feature of the present invention, the motor 12 and shaft-encoder 18 obviate the need for a conventional spring-biased tensioner such as used in typical seat belt tensioners. One of ordinary skill in the art will readily appreciate that shaft encoders are generally known, and that the shaft-encoder 18 can be arranged with two channels or an absolute position read out to provide the necessary directional information and the position counts, and the belt reel mechanism 14 can be designed for easy replacement separate from the motor 12 and shaft-encoder 18 assembly, so that either may be replaced or serviced without affecting the other.

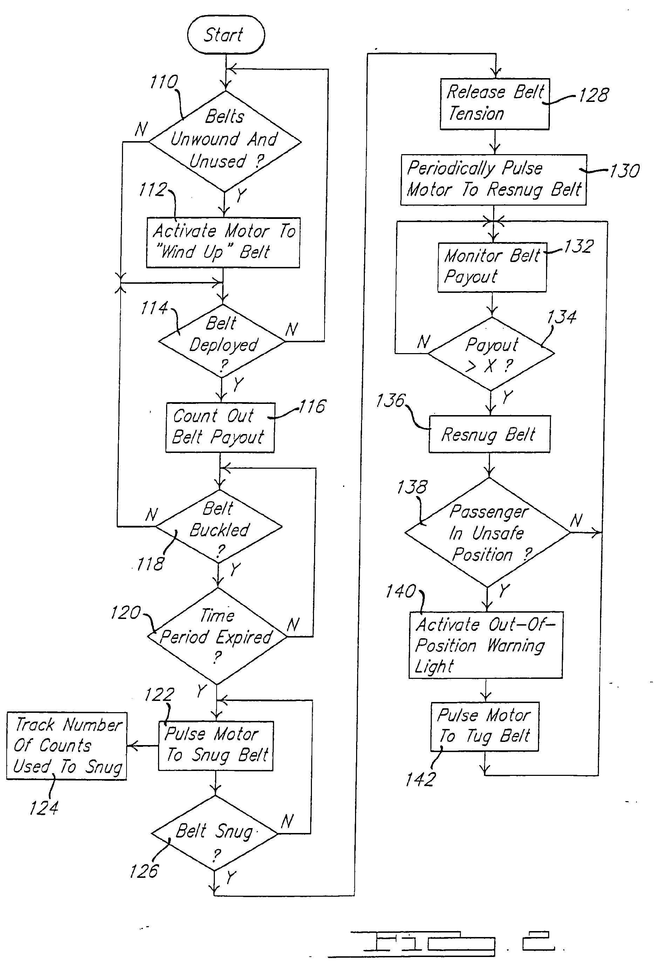

The control processor 20 receives inputs from the shaft-encoder 18, an external vehicle crash discrimination system 22, a seat belt-coupled switch 24, and an optional external radar system 26. The control processor 20 analyzes the input data to control actuation of the motor 12 via a control line 28, thereby controlling the operation of the seat belt reel mechanism 14 to regulate the seat belt tension. The overall operation of the controller 20 and the system 10 is more fully described hereinbelow with reference to Fig. 2.

In addition to control processor 20, operation of the seat belt reel mechanism 14'is further controlled by a locking mechanism 30 and a reusable pyrotechnic actuator/pretensioner 32. The locking mechanism functions as an "anti-pay out" brake which is responsive to a g force activated and/or belt tension activated lock actuator 34 to lock movement of the reel mechanism 14, thereby maintaining the seat belt in its most tensioned position for the duration of an emergency or above threshold g force event. The reusable pyrotechnic actuator 32 is configured to augment the tensioning motor 12 during critical emergency/crash situations. A more detailed description of a suitable reusable pyrotechnic actuator can be found in commonly owned U.S. Patent No. 5,397,075 to Behr, and incorporated by reference herein. For illustrative purposes, the actuator 32 is shown in Fig. 1 as consisting of a mechanical drive mechanism 36 and a replaceable pyrotechnic cartridge 38.

Referring to Fig. 2, there is shown a flow diagram illustrating the belt tensioning operation of the present invention in normal, nonemergency situations. The system 10 derives power from either a vehicle interior lamp circuit (or other line not controlled by the ignition switch), and/or an ignition line. At step 110, the control processor 20 monitors the shaft-encoder input and the belt-coupled switch 24 input to determine whether the seat belt is unwound and/or unused. If the belt is unwound and/or unused, the processor 20 activates the motor 12 to wind the seat belt back onto the belt reel mechanism 14 at step 112. Any existing vehicle circuit which is activated by a vehicle door being opened can be used to initiate a "housekeeping" operation if the vehicle is entered, belts are unwound but unused, and the vehicle is exited without being started. The motor 12 provides a nominal winding tension which retracts the belt to the stored position. This tension can be overcome as the occupant unwinds and buckles the belt.

As the belt is deployed, the shaft-encoder allows the electronic control processor 20 to detect deployment of the belt (step 114) and to count off the amount of belt paid out during the deployment process at step 116. When the belt is buckled at step 118, the retracting force remains and the control process 20 counts off the amount of belt retracted. In further accordance with the' present invention, the amount of belt paid out can be used by the processor to determine whether an occupant is actually present, which information can be used to supplement a separate external occupant position sensing system.

After a certain time period during which the retracting force is applied (step 120) or after cessation of down-counts, the motor 12 is activated or pulsed at a higher power level (step 122) to snug the belt tension. This "snugging" tension would be felt by the occupant as a series of gentle tugs. During these tugs, the winder would continue to wind in the belt while the processor 20 tracks the counts (step 124).

After removal of excess slack from the belt (step 126), the winding tension applied by the motor would be substantially reduced to zero (step 128). Thus, the belt would be in a tensionless state during normal use so that the occupant would not be irritated by continuous belt tension such as exhibited with typical spring-loaded belt retractors. The amount of belt paid out is continuously tracked, with several counts of belt pay out being tolerated without restoring belt tension. If minor occupant motions cause additional belt to be unwound over what the system tolerates, the system will wind back the belt to the previously stored position.

Periodically, the controller will cause the motor 12 to apply a low level of tensioning (step 130) to re-initialize tensioning, thereby preventing the system from erroneously determining the occurrence of an excess pay out due to improper initial tensioning, such as caused by the occupant leaning back during the tension initialization procedure The processor 20 continues to monitor the belt pay out (step 132), and if more than a few pay out counts are detected (step 134), this information can be advantageously output for use by a separate occupant position sensing system. After a predetermined pay out is exceeded, the retracting tension would be activated at step 136, thereby effectively pretensioning the belt and providing a reminder to the occupant to return to a "normal" seating position.

In further accordance with the present invention, if a separate, external occupant position sensing system determined that the occupant was in an unsafe'seating position (step 138), the tensioning system 10 will illuminate a warning lamp at step 140, and cause the retracting tension to increase to a higher level than the above described snugging process to attract the attention of the occupant (step 142). Such a higher tensioning would create a "tugging" process on the occupant.

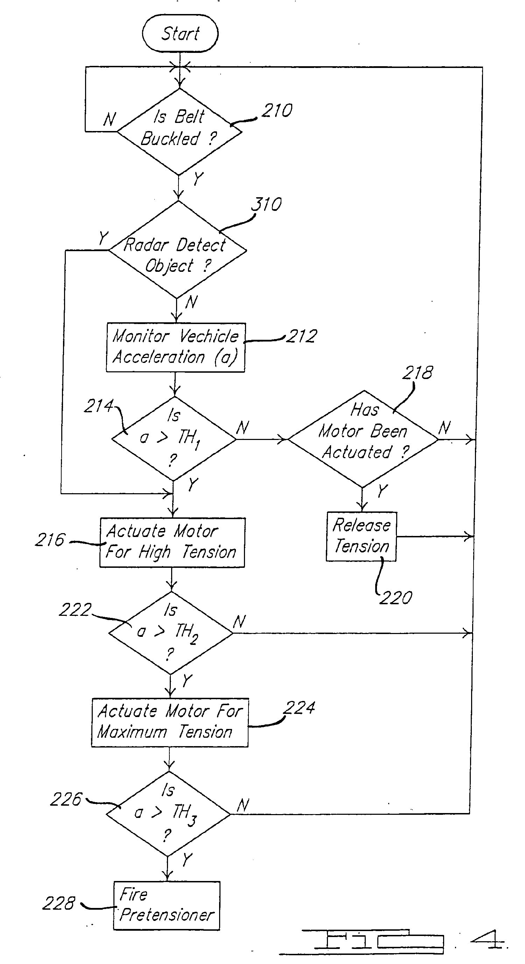

Referring to Fig. 3, there is shown a flow diagram illustrating the belt tensioning operation of the present invention during hard braking, emergency, and/or collision situations. After the system 10 initially determines that the belt has been deployed and, buckled at step 210, the system continuously monitors data representative of the vehicle's acceleration at step 212, such as generated by an algorithm based vehicle crash discrimination system. The monitored data can be representative of vehicle acceleration, velocity and/or a jerk value (i.e., slope of the acceleration data), and can be generated by an algorithm-based crash discrimination system which utilizes silicon machined accelerometers and/or occupant position sensing apparatus, such as taught in commonly owned U.S. Patent Nos. 5,363,302 to Allen et al, 5,337,238 to Gioutsos et al, U.S. Patent No. 5,446,661 to Gioutsos et al, U.S. Patent No. 5,490,069 to Gioutsos et al, all of which are incorporated by reference herein.

The acceleration (a) data is compared to a first threshold value TH₁ (step 214) and if TH₁ is exceeded, the motor 12 is actuated to apply a high level retracting force to the seat belt (step 216). The threshold value TH₁ is approximately equal to a .3g force event, or to otherwise be commensurate with a nonpanic braking situation. If the acceleration data falls below TH₁, then the processor determines whether the motor 12 has been actuated at step 218. If the motor was actuated, the motor is deactivated to release the high tension on the belt at step 220.

In further accordance with the present invention, the tensioning operation is provided with an ability to retract the belt with a higher, maximum level of tension in more critical situations. More specifically, the acceleration data is compared to a second threshold value TH₂ at step 222, wherein TH₂ could be a value substantially approximating a .6g force event or other suitable algorithmic measure. If TH₂ is exceeded, the motor 12 is actuated to apply the motor's maximum possible torque to retract the belt at step 224. Since the processor 20 is continuously monitoring the acceleration data, the level of belt tension being applied is always released any time the acceleration data falls below the appropriate threshold level.

In the event of a major deceleration, such as the acceleration data exceeding a third threshold valve TH₃ (step 226) set approximately equal to a level required to close a safing sensor in a crash discrimination system, or at a higher level determined by the crash discrimination algorithm, the pyrotechnic actuator/pretensioner 32 would be triggered at step 228. This would provide a final tensioning of the belt system prior to a vehicle impact. In accordance with one of the features and advantages of the present invention, this could occur for crash events of less velocity than normally used as a threshold for deploying an air bag, because the pretensioner 32 is reusable with only minor maintenance, i.e., replacement of cartridge 38. In other words, costly damage to the vehicle or the restraint system 10 does not occur, and therefore there is no penalty for an early actuation of the pretensioner 32. If the crash event is harsh enough to stretch the belt webbing as determined by the crash algorithm and/or the exceeding of a predetermined deceleration threshold level, the crash event and/or data would be noted in a crash record of the crash discrimination system, and a service warning lamp would be lit.

Triggering .at a lower level is particularly advantageous because of the protection provided for lower-level crash events, thereby allowing the seat belt to operate over a longer time period in the case of high speed crash events. Lower threshold triggering may also allow the pyrotechnic pretensioner to use a slower gas generation rate than known units, thereby reducing chest slap caused by the belt quickly tensioning.

During post-ignition servicing, the cartridge 28 for the pretensioner 32 is replaced and the belt webbing is visually inspected for stretching. The belt webbing is replaced if stretching is noted or if the service warning lamp and diagnostic message indicates sufficient crash severity. Replacement typically will not be necessary as a result of low-speed deployments.

Fig. 4 shows a further embodiment of the present invention incorporating an input from the optional object detecting radar system 26 to the system operation as described above in context with Fig. 3. Like elements and operational steps are designated with identical reference numbers. As shown at step 310, the independent, on-board radar system 26 scans the physical surroundings of the vehicle to detect the presence of objects/obstructions, and to otherwise predict impending collisions in response thereto. The radar system 26 can be of conventional design and implemented in a manner known to'one having ordinary skill in the art since the particulars of the radar system are not critical to the present invention. If the radar system 26 provides a signal predicting an impending impact, the processor can provide early actuation of the motor 12 to begin retracting the seat belt with a high tension (step 216) a second or two prior to the anticipated crash. If the crash never occurs, such as evidenced by the vehicle acceleration never exceeding any of the threshold values, the belt tension will be released. The tugging process provided in response to the radar system not only provides enhanced occupant safety due to early belt tensioning, but also functions as a tactile warning signal to the occupant (i.e., the driver) to thereby potentially assist the driver in implementing defensive driving measures or to otherwise avoid the impending collision.

It will be understood that the foregoing description of the preferred embodiment of the present invention is for illustrative purposes only, and that the various structural and operational features herein disclosed are susceptible to a number of modifications, none' of which departs from the spirit and scope of the present invention as defined in the appended claims.
1. A method of controlling a seat belt in a vehicle, comprising:
   a. applying a tension to the seat belt, wherein said tension exceeds a first tension threshold;
   b. providing for releasing said tension by providing for paying out a predetermined amount of webbing of the seat belt; and
   c. determining the amount of payout of said webbing.
2. A method of controlling a seat belt in a vehicle as recited in claim 1, wherein said tension is applied by an electric motor operatively coupled to a seat belt reel mechanism.
3. A method of controlling a seat belt in a vehicle as recited in either of claims 1 or 2, wherein the operation of applying a tension comprises applying a torque with said electric motor, wherein said torque exceeds a first torque threshold.
4. A method of controlling a seat belt in a vehicle as recited in any of claims 1 through 3, further comprising monitoring a period of time following the application of said tension to the seat belt, and after said period of time exceeds a first time period threshold, applying a tension exceeding a second tension threshold, wherein said second tension threshold exceeds said first tension threshold.
5. A method of controlling a seat belt in a vehicle as recited in any of claims 1 through 3, further comprising monitoring an amount retraction of the seat belt, and after said amount of retraction ceases to decrease, applying a tension exceeding a second tension threshold, wherein said second tension threshold exceeds said first tension threshold.
6. A method of controlling a seat belt in a vehicle as recited in any of claims 1 through 5, wherein said webbing is supplied from a seat belt reel mechanism, the operation of paying out a predetermined amount of webbing is responsive to a rotation of a spool in said seat belt reel mechanism, and the operation of determining the amount of payout of said webbing comprises measuring an angle responsive to said rotation of said spool.
7. A method of controlling a seat belt in a vehicle as recited in any of claims 1 through 6, further comprising generating a signal indicative of whether or not an occupant is present responsive to said amount of payout.
8. A method of controlling a seat belt in a vehicle as recited in any of claims 1 through 7, further comprising generating a signal indicative of whether or not an occupant is out-of-position responsive to said amount of payout.
9. A method of controlling a seat belt in a vehicle as recited in claim any of claims 1 through 8, further comprising:
   a. providing for paying out said webbing responsive to occupant movement in the vehicle; and
   b. reapplying said tension if said amount of payout exceeds a payout threshold.
10. A method of controlling a seat belt in a vehicle as recited in claim 9, wherein if said amount of payout exceeds said payout threshold, then at least intermittently increasing said tension in the seat belt.
11. A method of controlling a seat belt in a vehicle as recited in any of claims 1 through 10, further comprising:
   a. storing as a stored value said amount of payout of said webbing at a first time; and
   b. providing for paying out said webbing responsive to occupant movement in the vehicle, wherein the operation of paying out webbing responsive to occupant movement in the vehicle occurs after said first time, and if said amount of payout of said webbing at a second time exceeds said stored value, then retracting said webbing until the amount of payout is substantially equal to said stored value.
12. A method of controlling a seat belt in a vehicle as recited in claim 11, further comprising periodically repeating steps a-c of claim 1, so as to initialize the seat belt to a safe substantially tensionless condition.
13. A method of controlling a seat belt in a vehicle as recited in any of claims 1 through 12, further comprising detecting if the seat belt is buckled prior to the operation of applying said tension to the seat belt.
14. A seat belt tension control system, comprising:
   a. an electric motor operatively coupled to a seat belt reel mechanism, wherein the seat belt is wound by the seat belt reel mechanism responsive to said electric motor;
   b. an encoder adapted to measure a position of said seat belt reel mechanism responsive to a payout of seat belt webbing from the seat belt reel mechanism; and
   c. a control processor operatively coupled to said electric motor and to said encoder, wherein said control processor is adapted to control said electric motor responsive to a signal from said encoder.
15. A seat belt tension control system as recited in claim 14, further comprising a seat belt buckle switch operatively coupled to control processor, wherein said control processor is further adapted to control said electric motor responsive to a signal from said seat belt buckle switch.
16. A seat belt tension control system as recited in either of claims 14 or 15, further comprising a locking mechanism operatively coupled to said seat belt reel mechanism wherein said locking mechanism is adapted to prevent retraction of said seat belt webbing from said seat belt reel mechanism responsive to either an acceleration of the vehicle or a tension in seat belt.
17. A method of controlling a seat belt in a vehicle so as to communicate to an occupant wearing the seat belt, comprising:
   a. generating a first signal indicative of either an occupant seating condition or a vehicle condition, responsive to which an occupant would be susceptible to injury; and
   b. communicating a second signal to the occupant by at least intermittently increasing a tension in the seat belt, wherein the operation of communicating said second signal is responsive to said first signal.
18. A method of controlling a seat belt in a vehicle so as to communicate to an occupant wearing the seat belt as recited in claim 17, wherein said first signal is indicative of whether the occupant is out-of-position relative to the safety restraint system, whereby when out-of-position, the occupant would be susceptible to injury from a deployment of the safety restraint system.
19. A method of controlling a seat belt in a vehicle so as to communicate to an occupant wearing the seat belt as recited in either of claims 17 or 18, wherein the operation of generating a first signal comprises sensing a position of the occupant with an occupant position sensor.
20. A method of controlling a seat belt in a vehicle so as to communicate to an occupant wearing the seat belt as recited in any of claims 17 through 19, wherein the operation of generating a first signal comprises determining the amount of payout of the seat belt and comparing said amount of payout with a payout threshold, wherein if said amount of payout exceeds said payout threshold, then said first signal is adapted so as to indicate that the occupant is out-of-position.
21. A method of controlling a seat belt in a vehicle so as to communicate to an occupant wearing the seat belt as recited in any of claims 17 through 20, wherein said first signal is indicative of whether the vehicle is likely to become involved in a crash.
22. A method of controlling a seat belt in a vehicle so as to communicate to an occupant wearing the seat belt as recited in any of claims 17 through 21, wherein said first signal is generated by a radar system adapted to sense a surroundings of the vehicle.
23. A method of controlling a seat belt in a vehicle so as to communicate to an occupant wearing the seat belt as recited in any of claims 17 through 23, wherein said tension is increased to a level that is higher than a tension level used to initially position the seat belt.
24. A seat belt tension control system, comprising:
   a. an electric motor operatively coupled to a seat belt reel mechanism, wherein the seat belt is wound by the seat belt reel mechanism responsive to said electric motor;
   b. a radar system adapted to sense a surroundings of the vehicle; and
   c. a control processor operatively coupled to said electric motor and to said radar system, wherein said control processor is adapted to communicate an indication of potential danger to the occupant by controlling said electric motor responsive to a signal from said radar system if said signal indicates that the vehicle is likely to become involved in a crash.
25. A seat belt tension control system, comprising:
   a. an electric motor operatively coupled to a seat belt reel mechanism, wherein the seat belt is wound by the seat belt reel mechanism responsive to said electric motor;
   b. an occupant position sensing system adapted to sense a position of an occupant within a vehicle; and
   c. a control processor operatively coupled to said electric motor and to said occupant position sensing system, wherein said control processor is adapted to communicate an indication of potential danger to the occupant by controlling said electric motor responsive to a signal from said occupant position sensing system if said signal indicates that the occupant is positioned so as to be in potential danger.
26. A method of controlling a seat belt in a vehicle, comprising:
   a. generating a signal with a sensor, wherein said signal is indicative of either an actual or a prospective restraint of the occupant by the seat belt; and
   b. controlling a seat belt reel mechanism responsive to said signal.
27. A method of controlling a seat belt in a vehicle as recited in claim 26, wherein the operation of controlling said seat belt reel mechanism comprises causing said seat belt reel mechanism to wind the seat belt so that the tension in the seat belt is increased above a first tension threshold if said signal is indicative that the vehicle could become involved in a crash, wherein the operation of winding said seat belt at least intermittently increases said tension above said first tension threshold.
28. A method of controlling a seat belt in a vehicle as recited in either of claims 26 or 27, further comprising:
   a. sensing an acceleration of the vehicle either from said signal or from a separate sensor;
   b. responsive to the sensed acceleration, determining if a crash has occurred within a period of time following a time when said signal first indicated when the vehicle would likely become involved in said-crash; and
   c. if the operation of determining if a crash has occurred determines that a crash has not occurred, then providing for said seat belt reel mechanism to unwind the seat belt.
29. A method of controlling a seat belt in a vehicle as recited in any of claims 26 through 28, wherein said sensor comprises an accelerometer operatively coupled to said vehicle.
30. A method of controlling a seat belt in a vehicle as recited in any of claims 26 through 29, wherein the operation of generating a signal with a sensor comprises generating an acceleration signal with said accelerometer responsive to vehicle acceleration, and comparing said acceleration signal with a first acceleration threshold, and the operation of controlling said seat belt reel mechanism comprises causing said seat belt reel mechanism to wind the seat belt so that the tension in the seat belt is increased above a first tension threshold if said acceleration signal exceeds said first acceleration threshold.
31. A method of controlling a seat belt in a vehicle as recited in claim 30, wherein said first acceleration threshold corresponds to a precrash braking event.
32. A method of controlling a seat belt in a vehicle as recited in either of claims 30 or 31, further comprising providing for unwinding the seat belt if said acceleration signal becomes less than said first acceleration threshold.
33. A method of controlling a seat belt in a vehicle as recited in any of claims 30 through 32, further comprising comparing said acceleration signal with a second acceleration threshold, wherein said second acceleration threshold exceeds said first acceleration threshold, and if said acceleration signal exceeds said second acceleration threshold, the operation of controlling said seat belt reel mechanism comprises causing said seat belt reel mechanism to wind the seat belt so that the tension in the seat belt is increased above a second tension threshold, wherein said second tension threshold exceeds said first tension threshold.
34. A method of controlling a seat belt in a vehicle as recited in claim 33, further comprising comparing said acceleration signal with a third acceleration threshold, wherein said third acceleration threshold exceeds said second acceleration threshold, and if said acceleration signal exceeds said third acceleration threshold, then activating a pretensioner, wherein said pretensioner applies a tension to the seat belt, and said tension exceeds a third tension threshold.
35. A method of controlling a seat belt in a vehicle as recited in any of claims 26 through 34, wherein said signal is generated by a radar system adapted to sense a surroundings of the vehicle.
36. A method of controlling a seat belt in a vehicle as recited in any of claims 26 through 35, further comprising:
   a. sensing an acceleration of the vehicle either from said signal or from a separate sensor;
   b. comparing the sensed vehicle acceleration with a first acceleration threshold;
   c. if said sensed vehicle acceleration exceeds said first acceleration threshold, then causing said seat belt reel mechanism to wind the seat belt so as to remove at least a portion of slack from the seat belt;
   d. comparing said sensed vehicle acceleration with a second acceleration threshold, wherein said second acceleration threshold exceeds said first acceleration threshold; and
   e. if said sensed vehicle acceleration exceeds said second acceleration threshold, then triggering a pretensioner, wherein said pretensioner is operatively coupled to the seat belt and when triggered, said pretensioner is adapted to increase a tension in the seat belt
37. A seat belt tension control system, comprising:
   a. an electric motor operatively coupled to a seat belt reel mechanism, wherein the seat belt is wound by the seat belt reel mechanism responsive to said electric motor;
   b. a radar system adapted to sense a surroundings of the vehicle; and
   c. a control processor operatively coupled to said electric motor and to said radar system, wherein said control processor is adapted to control said electric motor responsive to a signal from said radar system.
38. A seat belt tension control system as recited in claim 37, further comprising an accelerometer, wherein said accelerometer is operatively coupled to said control processor, and said control processor is further adapted to control said electric motor responsive to a signal from said accelerometer.
39. A seat belt tension control system, comprising:
   a. an electric motor operatively coupled to a seat belt reel mechanism, wherein the seat belt is wound by the seat belt reel mechanism responsive to said electric motor;
   b. an accelerometer; and
   c. a control processor operatively coupled to said electric motor and to said accelerometer, wherein said control processor is adapted to control said electric motor responsive to a signal from said accelerometer.
40. A seat belt tension control system as recited in any of claims 37 through 39, further comprising a pretensioner, wherein said pretensioner is adapted to increase a tension in the seat belt, said pretensioner is operatively coupled to said control processor, and said control processor is further adapted to control said pretensioner responsive to a signal from said accelerometer.
41. A seat belt tension control system as recited in any of claims 34, 36 or 40 wherein said pretensioner comprises a replaceable pyrotechnic actuator.

## Claims

1. A seat belt tension control system, comprising:
a. an electric motor operatively coupled to a seat belt reel mechanism, wherein the seat belt is wound by the seat belt reel mechanism responsive to said electric motor;
b. an accelerometer; and
c. a control processor operatively coupled to said electric motor and to said accelerometer, wherein said control processor is adapted to control said electric motor responsive to a signal from said accelerometer.

2. A seat belt tension control system as recited in claim 1, further comprising a pretensioner, wherein said pretensioner is adapted to increase a tension in the seat belt, said pretensioner is operatively coupled to said control processor, and said control processor is further adapted to control said pretensioner responsive to a signal from said accelerometer.

3. A seat belt tension control system as recited in claim 1 or 2, wherein said pretensioner comprises a replaceable pyrotechnic actuator.
